# EUROPEAN PATENT APPLICATION

(11) **EP 1 311 116 A2**
(43) Date of publication of application: **14.05.2003**
(21) Application number: 02292679.4
(22) Date of filing: 29.10.2002
(51) Int. Cl.: H04N 5/00

(54) **Method for recording digital video broadcast data, and digital video recorder**

(30) Priority: 08.11.2001 EP 01250395
(71) Applicant: Thomson Licensing S.A., 92100 Boulogne-Billancourt (FR)
(72) Inventor: Adolph, Dirk, 30952 Ronnenberg (DE); Kubsch, Stefan, 31559 Hohnhorst (DE); Winter, Marco, 30173 Hannover (DE)
(74) Representative: Hartnack, Wolfgang, Dipl.-Ing.

(57) **Abstract**

The invention relates to a digital video recorder and to a method for recording DVB data. A program association table comprising program numbers and assigned program map table packet identifiers are recorded. A program map table packet being accessible by means of its assigned packet identifier is also recorded. A data stream type is provided in the program map table and a data stream type packet identifier is assigned to the data stream type.

## Description

The invention relates to the field of digital video broadcast (DVB), and more particularly to recording a DVB data stream by means of a digital video recorder, e.g. DVR or DVD Streamer or similar recorders.

### Background

Added value becomes increasingly important in the consumer electronic market. As soon as additional data channels for the transmission of service information become available broadcasters will use such additional channels. Examples for such channels include teletext, RDS, EPG and the Internet.

Another example for the transmission of service information is DSM-CC. DSM-CC (Digital Storage Media - Command and Control) is an ISO/IEC standard for the delivery of multimedia broadband services. Open protocols in this area are essential for the widespread deployment of such services. Total interoperability between service providers and consumers requires different aspects of broadband service delivery.

DSM-CC is transport layer independent. In this way any application written to use DSM-CC need not concern itself with the underlying transport layer the application will use between the Server and the Client. The same application can be delivered over a multitude of broadband networks, ranging from a pure MPEG-2 Transport Stream (TS) network, to a Core ATM and a variety of access networks, with or without ATM, even including high-speed local area networks (LANs), to end-to-end ATM networks.

### Invention

A network supporting DSM-CC can offer a wide range of broadband applications. Each protocol area can be implemented separately thus aiding in the integration of the DSM-CC standard with other standards, e.g. Digital Video Broadcast (DVB). Similarly, the DSM-CC Switched Digital Broadcast (SDB) Channel Change Protocol can be implemented without implementing the DSM-CC U-N or U-U messages (cf. DVB TM1594, Digital Video Broadcast Draft Specification for Network Independent Protocols for Interactive Services, March, 1996). Therefore it is possible to record DSM-CC data carousel information by means of any prior art DVR recorder. However, as the DSM-CC data carousel information is not associated with any DVB program stream it is skipped because a DVR decoder will only receive and decode a single DVB program stream but not separate information coming from the DSM-CC data carousel. As a consequence the additional information provided via the DSM-CC carousel is not accessible by a user and is therefore missing.
A further disadvantage of state-of-the-art DVRs is the lack of a means for storing user provided data such as annotations, pictures, etc., or data coming from sources other than the Internet. Such additional data cannot be recorded in conjunction with a DVR file in a meaningful way.

A problem to be solved by the invention is to provide an improved method for the recording of DVB data, and an improved DVB recorder as well as a corresponding computer program product.
This problem is solved by the features of the independent claims.

The invention is particularly advantageous in that it enables a user storing, in particular automatically, DSM-CC data or other service data received by means of a digital video broadcast (DVB) data stream as well as storing user provided data as an integral part of the file produced by the digital video recorder in accordance with the invention.

According to a preferred embodiment of the invention this is accomplished by defining an additional stream type in the program map table (PMT). The additional stream type is reserved for additional data to be stored, in particular automatically, as an integral part of the DVR recorded file. This additional data can be DSM-CC data carousel data or it can be other service data provided by the broadcaster and/or user provided data, such as user annotations, pictures, and/or Internet files.

For example, a user can specify a URL (Uniform Resource Locator) for storage in a data stream type packet, in particular automatic storage. Alternatively, not the URL itself but the corresponding file which is downloaded from the Internet is stored by means of one or more data stream type packets.

In accordance with a further preferred embodiment of the invention DSM-CC data is recorded by the digital video recorder in accordance with the invention. When a user desires adding user provided information to the file produced by the digital video recorder, this is performed by partly overwriting the DSM-CC data, because the DSM-CC data may be of no further interest for the user.

In accordance with a further preferred embodiment of the invention the DSM-CC data and the user provided data are combined and stored by means of data stream type packets. This can be done by splicing the DSM-CC data and the user defined data or by ingesting the user defined data into the DSM-CC data.

In essence the invention encompasses two main aspects:
i) In a first aspect it provides for the (automatic) storage of DSM-CC data carousel information for later retrieval by combining a DVB program stream with the DSM-CC data carousel information. An appropriate decoder is able to decode and depict the DSM-CC data carousel when decoding the program stream.
ii) In a second aspect the invention provides for a technique to (automatically) introduce, substitute and combine other added value data within the DVB program stream by means of the DSM-CC data carousel. The recording method of the invention enables a user to select additional data like a picture, a personal text or the content of some Internet pages and store them along with the program stream on the DVR disc. The playback of the DVB program stream makes it possible for an appropriate DVR decoder to decode and display these data. Any copy process, even onto other media like DVD streamer, preserves this user data.

Advantageous additional embodiments of the invention are disclosed in the respective dependent claims.

### Drawings

Exemplary embodiments of the invention are described with reference to the accompanying drawings, which show in:
- Fig. 1: schematic diagram depicting the structure of DSM-CC data carousel information;
- Fig. 2: schematic diagram illustrating the integration of data stream type packets into a DVR file.

### Exemplary embodiments

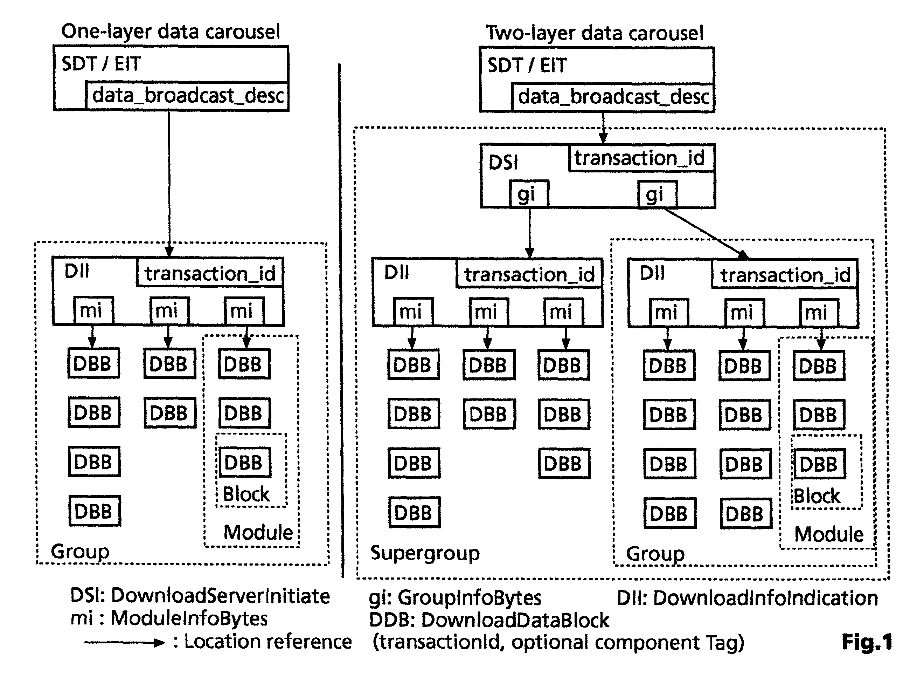

Figure 1 shows a schematic diagram of a DSM-CC data structure. On the left hand of Fig. 1 a single-layer data carousel is shown. This data structure has a service data table (SDT) and/or an event information table (EIT) containing a data element of the type data_broadcast_descriptor or data_broadcast_id_descriptor. Such data types are as such known from EN 300 468, DVB Specification for Service Information (SI) in DVB Systems.

The data_broadcast_descriptor points to a transaction_id of a DII (DownloadInfoIndication) module.
The DII contains a number of mi bytes (ModuleInfoBytes). These point to a number of DDBs (DownloadDataBlocks). Thereby a group is constituted.
In comparison to the left hand single-layer data carousel structure the right hand dual-layer data carousel structure of Fig. 1 has an additional DSI (DownloadServerInitiate). This DSI contains GroupInfoBytes (gi). Thereby a so-called super group is constituted.

For details of the DSM-CC data carousel structure, reference is made to ISO/IEC 138181-6, Part 6 "Extension for Digital Storage Media Command and Control (DSM-CC)", DVB Document A027, "Specification for Data Broadcasting - Commercial Requirements", ETR 162 - ETSI Technical Report, "Digital broadcasting systems for television, sound and data services", "Allocation of Service Information (SI) codes for Digital Video Broadcasting (DVB) systems".

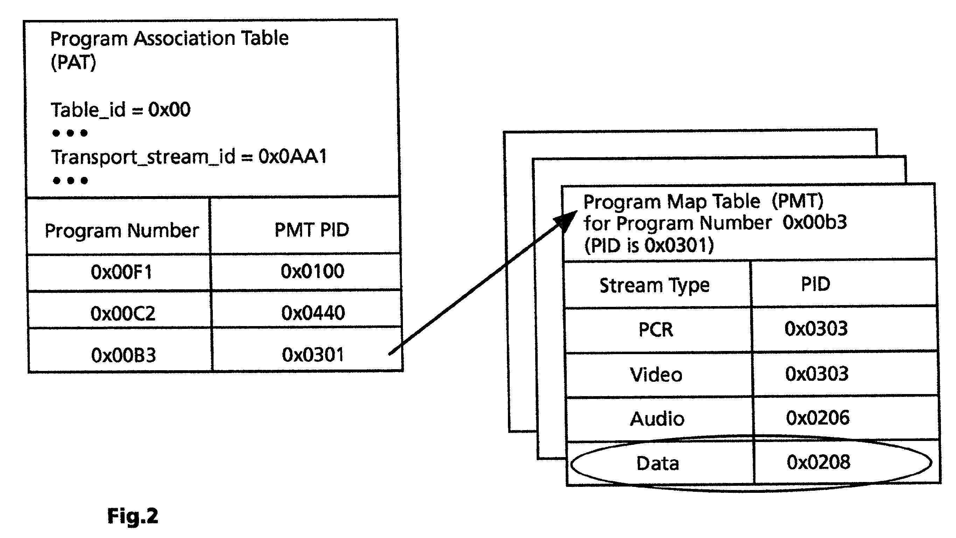

Figure 2 illustrates the structure of a file created by a digital video recorder in accordance with the invention. The data structure comprises a program association table (PAT). The program association table has a table identifier (table_id), which is 0x00 in this case. Further the PAT has a transport_stream_id that is equal to 0x0AA1 in this example. The transport_stream_id serves to assign the PAT to a data stream received from a transponder.

The data stream comprises a number of television or other programs that are identified by unique program numbers. In the example considered here the data stream comprises three programs with numbers 0x00F1, 0x00C2 and 0x00B3.
Each program number has an assigned program map table (PMT) packet identifier (PID). For the program number 0x00F1 the PID is 0x0100, for the program number 0x00C2 the PID is 0x0440 and for the program number 0x00B3 the PID is 0x0301.

By means of the respective PMT PID at least one data packet containing a PMT is identified for each program number.

By way of example the PMT for the program number 0x00B3 is shown in Figure 2. This PMT is identified by the PMT PID entered for the program number 0x00B3 in the PAT.

The structure of a PMT is as such known from the standard ISO/IEC 13818-1, MPEG-2 Systems - Transport Stream program map section. The PMT identifies data packets of different stream types (program clock reference - PCR, video and audio information). In the example considered here clock information (PCR) is contained in data packets having the PID 0x0303. Video information is contained in all data packets having the PID 0x0303 and audio information is contained in data packets having the PID 0x0206.

In addition, a data stream type is introduced in accordance with the invention. The data stream type has an assigned PID for identification of data packets containing data stream type information. In the example considered here the PID is 0x0208.
Thereby additional service information, such as DSM-CC data carousel information and/or user provided data could be stored in data packets being identified by the PID 0x0208. This kind of data structure has the further advantage that it is downwards compatible. In other words, prior art decoders, which are unaware of the additional data stream type, can still decode a file recorded in accordance with the invention. In this case the data stream type information is ignored.

In one aspect of the invention the DSM-CC data carousel channel is treated together with the program stream, i.e. playback and copy of the stream will preserve the DSM-CC data carousel. Devices able to decode the DSM-CC data carousel information can display it, but non-compliant decoders will not be affected in any way because they will skip it.

When copying a data stream that now includes the DSM-CC data carousel, the attached carousel data are also copied on another DVR or DVD Streamer and are preserved for other players' capabilities.

Another important application is the attaching of other services like Internet web pages or private user data. The addition of private data or Internet data becomes possible by substituting existing or appending new DSM-CC data carousel information. The carousel information is carrying the data to be attached.

Instead of taking the DSM-CC data carousel for a container, it is also possible to choose a synchronous or asynchronous packet stream as described by the data_broadcast_descriptor or data_broadcast_id_descriptor. The data_broadcast_id within descriptors is determining whether a synchronous or asynchronous packet stream, or whether a DSM-CC data carousel is used. Attaching is possible during the recording process but also afterwards. When appending DSM-CC data carousel information after having recorded a program stream, the corresponding packets will be spliced into the multiplex in an off-line process.

## Claims

1. Method for recording digital video broadcast data, including the steps of:
- recording a program association table (PAT) comprising program numbers and assigned program map table (PMT) packet identifiers (PID),
- recording a program map table (PMT) packet being accessible by means of its assigned packet identifier (PID),
**characterized by:**
- providing a data stream type in the program map table and assigning a data stream type packet identifier to the data stream type.

2. Method according to claim 1, further including the storage of data stream type packets having the data stream type packet identifier within the digital video broadcast data stream.

3. Method according to claim 1 or 2, further including the steps:
- receiving DSM-CC carousel data;
- recording the DSM-CC carousel data in a data stream type packet.

4. Method according to claim 1, 2 or 3, wherein user-provided and/or user-defined data are stored in the data stream type packet.

5. Method according to claim 3 or 4, wherein DSM-CC carousel data being recorded in a data stream type packet by user-provided and/or user-defined data is at least partly overwritten.

6. Method according to one of claims 1 to 5, further including the steps:
- receiving service data, such as DSM-CC carousel data;
- providing user data, such as user annotations or data files specified by a user;
- storing a portion of the service data and storing a portion of the user-provided data in the data stream type packet, e.g. by means of splicing and/or ingesting user-provided data into the service data.

7. Digital video recorder (DVR) comprising means for performing a method in accordance with one of claims 1 to 6.

8. Computer program product comprising means for performing a method in accordance with one of claims 1 to 6.
